# EUROPÄISCHE PATENTANMELDUNG

(11) **EP 1 970 330 A1**
(43) Veröffentlichungstag der Anmeldung: **17.09.2008**
(21) Anmeldenummer: 07405085.7
(22) Anmeldetag: 15.03.2007
(51) Int. Cl.: B65G 47/34, B42C 19/08

(54) **Einrichtung zur gesteuerten Ueberführung von auf einem Förderweg einer Verarbeitung zugeführten Buchblocks**

(71) Anmelder: Müller Martini Holding AG, 6052 Hergiswil (CH)
(72) Erfinder: Müller, Hans, 97922 Lauda-Königshofen (DE)

(57) **Zusammenfassung**

Eine Einrichtung (1) zur gesteuerten Ueberführung von auf einem Förderweg (3) einer Verarbeitung zugeführten Buchblocks (2) besteht aus einer Zuführvorrichtung (4), für die sich nacheinander auf dem Förderweg (3) folgenden Buchblocks (2), und einem in Förderrichtung (F) der Buchblocks (2) daran anschliessenden Förderorgan (9), auf dem die Buchblocks (2) seitlich geführt sind, sowie einer mit dem Forderörgan (9) zusammenwirkenden und die Buchblocks (2) im Näherungsbereich des Förderendes des Förderorgans (9) erfassenden, als Eintaktvorrichtung zur weiteren Verarbeitung ausgebildeten Antriebsvorrichtung (10), welcher über eine verbundene Steuerung ein in Förderrichtung (F) auf die Vorderkante eines Buchblocks (2) reagierender Sensor (12) zugeordnet ist, wobei dem Sensor (12) entlang des Förderweges (3) ein weiterer, dem Förderorgan (9) zugeordneter und mit der Steuerung verbundener Sensor (35) im Abstand (A) vorgeschaltet ist.

## Beschreibung

Die Erfindung betrifft eine Einrichtung zur gesteuerten Ueberführung von auf einem Förderweg einer Verarbeitung zugeführten Buchblocks, bestehend aus einer Zuführvorrichtung für die sich nacheinander auf dem Förderweg folgenden Buchblocks, und einem in Förderrichtung der Buchblocks förderwirksam anschliessenden Förderorgan, auf dem die Buchblocks seitlich geführt sind, sowie einer mit dem Förderorgan zusammenwirkenden und die Buchblocks im Näherungsbereich des Förderendes des Förderorgans erfassenden, als Eintaktvorrichtung zur weiteren Verarbeitung ausgebildeten Antriebsvorrichtung, welcher über eine verbundene Steuerung ein in Förderrichtung auf die Vorderkante eines Buchblocks reagierender Sensor zugeordnet ist.
Hierbei kann es sich um die Verarbeitung ungebundener oder gebundene Buchblocks handeln, beispielsweise klebegebundene oder fadengeheftete, die zu Büchern weiterverarbeitet werden.
Als Maschinen der Weiterverarbeitung sind u.a. Ableimmaschinen zur Beleimung von Buchblockrücken, Klebebinder, sog. Ganzpressen und/oder Schneidemaschinen für Buchblöcke oder Bücher gemeint, die taktgebunden mit der gattungsgemässen Einrichtung zusammenwirken.

Die Buchblocks oder Bücher folgen sich in einer regel- oder unregelmässigen Folge -auch lückenlos- nacheinander, vorzugsweise stehend auf dem Rücken oder auf der Flachseite liegend und mit der Kopf- oder Fusskante voraus.

Fördereinrichtungen für Druckerzeugnisse haben zur Weiterverarbeitung oft einen festen Teilungsabstand, der in Abhängigkeit der (grössten) Höhe eines Buchblocks oder Buches gewählt wird, beispielsweise 21" oder 24".

Als Beispiel ist hier eine Ganzpresse gewählt, die dazu bestimmt ist, fadengeheftete Buchblocks ganzflächig zu pressen. Durch den vorausgehenden Prozess entstehen Buchblocks mit erheblichen Unterschieden bezüglich Dicke. Dies entsteht durch unterschiedliche Falzarten, durch das Fadenheften oder Lagern der für einen Buchblock verwendeten Druckprodukte. Die sog. Rückensteigung entsteht durch das Falzen der Druckprodukte, ebenso die Unterschiede an Kopf und Fuss, wobei das Fadenheften sich zusätzlich auf die Rückensteigung auswirkt. Diese für eine Weiterverarbeitung ungünstige Situation kann mit einer Ganzpresse korrigiert werden, die nach einem Zuführabschnitt eine sog. Niederhaltepressvorrichtung für das Abpressen der Rückensteigung aufweist; sodann schliesst an die Niederhaltepressvorrichtung eine sog. Ganzpresse an. Letztere ist dafür zuständig, dass winkelgenaue Buchblocks entstehen, Blockdickenabweichungen verhindert werden, ein gleichmässig verteiltes Abpressen erfolgt und die Heftlöcher zusammengepresst werden. Beide Pressvorgänge laufen zeitabhängig voneinander ab, wobei bei der Verwendung einer Einrichtung nach der EP 1 591 273 A1 eine der Weiterverarbeitung vorgeschaltete Eintaktvorrichtung vorgesehen werden könnte, sodass eine zeitunabhängige Verarbeitung zwischen den Pressvorgängen stattfinden kann, die zur Optimierung der Pressfunktionen durch Erhöhen der Presszeit resp. zur Steigerung der Maschinengeschwindigkeit führen würde.

Die Aufgabe der vorliegenden Erfindung bezweckt eine Verbesserung der Nutzung der bekannten Einrichtung durch eine höhere Leistungsfähigkeit und/oder Zuverlässigkeit bei hoher Qualität.

Erfindungsgemäss wird die Aufgabe dadurch gelöst, dass dem Sensor entlang des Förderweges der Buchblocks ein weiterer, dem Förderorgan zugeordneter und mit der Steuerung verbundener Sensor im Abstand A vorgeschaltet ist.

Diese Massnahme ist einer weiteren Optimierung bei der Verarbeitung von Buchblocks in einer Buchlinie zuträglich.

Aufgrund der unterschiedlichen Formatgrösse der zu verarbeitenden Buchblocks ist es im Sinne einer wirtschaftlichen Nutzung der Einrichtung vorteilhaft, wenn der Abstand zwischen den Sensoren veränderbar ist.

Hierbei erweist es sich als zweckmässig, wenn der weitere Sensor bezüglich Abstand von dem Sensor verstell- resp. feststellbar angeordnet ist, sodass sich eine Aenderung des Abstandes auf einfache Art durchführen lässt, wobei sich diese Aenderung nach der Formathöhe der zugeführten Buchblocks und einem allfälligen Abstand zwischen den Buchblocks ergibt.

Vorzugsweise ist der Abstand zwischen den Sensoren so gewählt, dass wenigstens ein zweiter zu verarbeitender Buchblock miterfasst werden kann, im Sinne einer optimalen Nutzung der Pressplattenlänge der Ganzpresse.

Es erweist sich als einfach, wenn das Förderorgan als Förderband ausgebildet ist und eine geringere Fördergeschwindigkeit als die auf die Buchblocks einwirkende Antriebsvorrichtung aufweist. Dies geschieht zur Lückenbildung zwischen zwei resp. mehreren sich folgenden Buchblocks, die der Ganzpresse zugeführt werden.
D.h., der Sensor hält einen ersten (von beispielsweise zwei) Buchblock an, so dass er um eine geringe Länge (30 bis 40mm) den Sensor, der als Lichtschranke ausgebildet sein kann, in Förderrichtung F übersteht. Der auf dem Förderorgan folgende Buchblock stösst auf ersterem auf oder nähert sich diesem, wobei der weitere Sensor den nachfolgenden Buchblock erkennt. Ueber die Steuerung wird nun die Antriebsvorrichtung in Betrieb gesetzt und der erste Buchblock gegenüber dem Förderorgan beschleunigt, so dass gegenüber dem nachfolgenden Buchblock eine Lücke gebildet wird und der erste Buchblock ein nachgeschaltetes Transportband erreicht. Anschliessend wird der nachfolgende Buchblock durch die Antriebsvorrichtung erfasst und mit Abstand an das nachgeschaltete Transportband versetzt, auf dem die Buchblocks gemeinsam weiterverarbeitet werden. Der folgende dritte Buchblock wird nun wieder als erster Buchblock eines weiteren Paares von dem Sensor angehalten, dem ein weiterer Buchblock mit Abstand folgt. Das Spiel wiederholt sich jeweils im Verarbeitungstakt. Selbstverständlich kann auch eine taktweise Verarbeitung von mehr als zwei Buchblocks erfolgen, wenn die zur gemeinsamen Weiterverarbeitung vorgesehene Station es erlaubt.

Aus den erwähnten Gründen weist das Förderorgan wenigstens die Länge zweier sich folgender Buchblocks auf, wobei anstelle eines Förderbandes auch um einen quer zur Förderrichtung der Buchblocks angeordnete Achsen drehende Förderrollen verwendet werden können.

Für eine kontinuierliche Ueberführung der Buchblocks von einer Zuführvorrichtung auf das Förderorgan ist es zur Meidung von Störungen sinnvoll, wenn beide Organe etwa die gleiche Fördergeschwindigkeit aufweisen.

Die vorgeschlagene Einrichtung eignet sich ganz besonders für das Abpressen von Buchblocks oder Büchern, wenn eine der Eintaktvorrichtung in Förderrichtung der Buchblocks betrachtet nachgeschaltete und mit der Steuerung verbundene Ganzpresse vorgesehen ist, die durch wenigstens eine quer zur Förderrichtung der Buchblocks antreibbare Pressplatte und ein die Buchblocks stützendes Transportband ausgebildet ist, das an das Förderorgan förderwirksam anschliesst, indem die Eintaktvorrichtung und das Transportband der Ganzpresse zur Positionierung der zum gemeinsamen Abpressen gewählten Anzahl Buchblocks zwischen den Pressplatten der Ganzpresse mit der Steuerung verbunden sind.

Für den Einsatz der Einrichtung bei einer Ganzpresse ist dieser -wie weiter oben erwähnt- üblicherweise eine Falzniederhaltepresse vorgeschaltet.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels erläutert. Es zeigen:
- Fig. 1: eine Seitenansicht der erfindungsgemässen Einrichtung und
- Fig. 2: einen Grundriss der in Fig. 1 dargestellten Einrichtung.

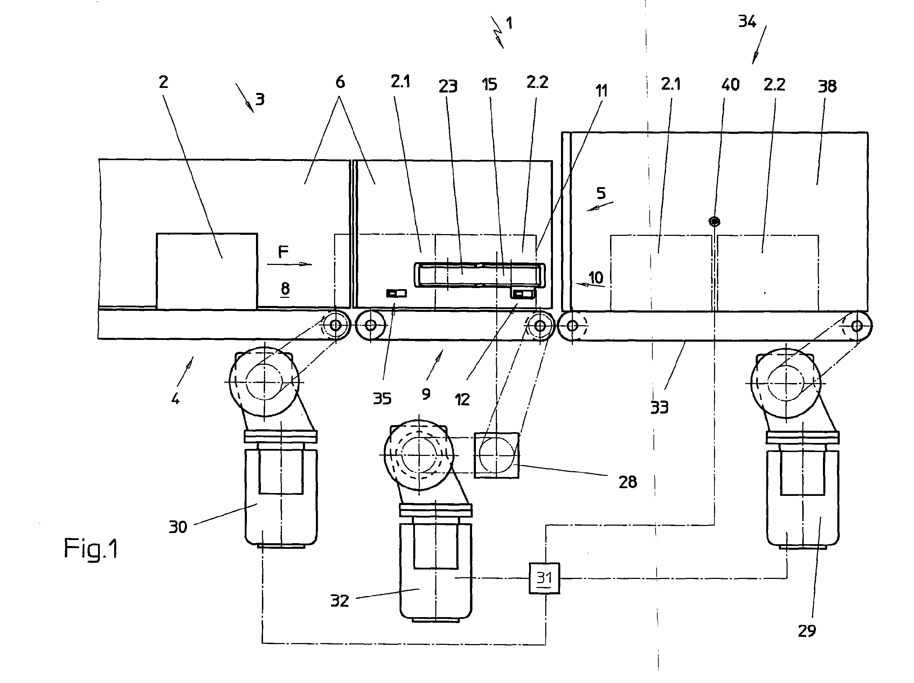

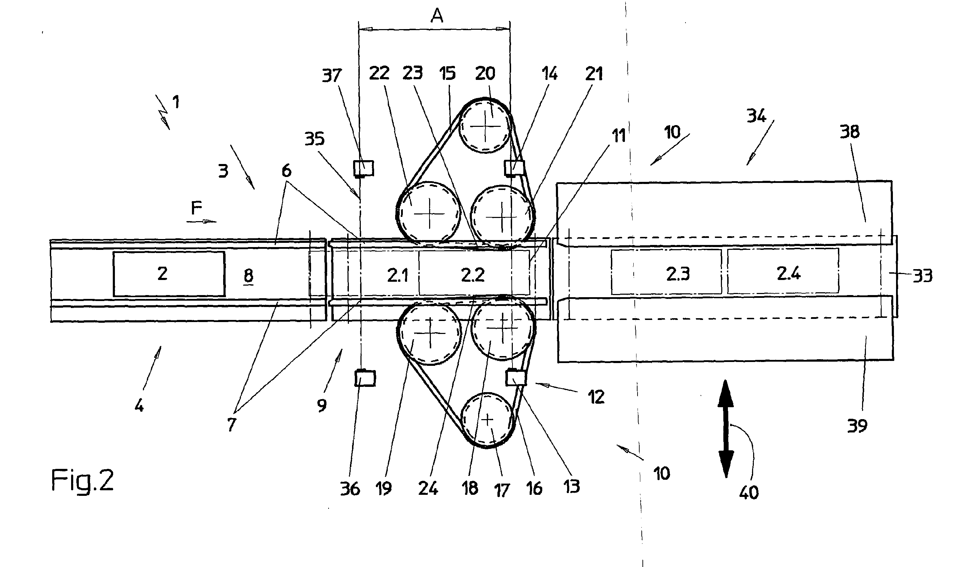

In den Fig. 1 und 2 ist eine Einrichtung 1 zur gesteuerten Ueberführung von auf einem Förderweg 3 zugeführten Buchblocks 2 zur taktweisen Verarbeitung dargestellt. Die Einrichtung 1 besteht aus einer Zuführvorrichtung 4, die beispielsweise aus einem oder mehreren umlaufenden Bändern, Riemen, Ketten oder dgl. gebildet ist. Die Buchblocks 2 werden vorzugsweise auf dem Rücken stehend, von seitlichen Führungswänden 6, 7 gegen das Umkippen gestützt, auf dem Arbeitstrum der Zuführvorrichtung 4 in regel- oder unregelmässiger Folge transportiert. Der Antrieb der Zuführvorrichtung 4 erfolgt in Förderrichtung F durch einen Motor 30, der mit einer Steuerung 31 zur Drehzahlveränderung verbunden ist. An die Zuführvorrichtung 4 schliesst ein Förderorgan 9 an, das anstelle von umlaufenden Bändern, Riemen, Ketten oder dgl. auch aus in Förderrichtung F hintereinander angeordneten, eine etwa rechtwinklig zur Förderrichtung verlaufende Drehachse aufweisenden Transport- oder Förderrollen gebildet sein könnte. Der Antrieb des Förderorgans 9 bildet ein Motor 32, der ebenfalls mit der Steuerung 31 verbunden ist; zur Antriebskoppelung ist der gleiche Motor 32 auch mit der Antriebsvorrichtung 10 einer Eintaktvorrichtung 5 zur Ueberführung der Buchblocks 2 von dem Förderorgan 9 auf ein Transportband 33 verbunden, wobei die Antriebsvorrichtung 10 zur Beschleunigung der Buchblocks 2 von dem Förderorgan und zur Bildung einer Lücke zwischen zwei Buchblocks 2 auf dem Transportband 33 vorgesehen ist. Nicht dargestellt ist in den Fig. 1 und 2 eine Ausführungsform, bei der das Förderorgan 9 und die Antriebsvorrichtung 10 jeweils separate Antriebsmotoren, vorzugsweise drehwinkelgesteuerte Motoren aufweisen, die mit der Steuerung 31 verbunden und zur Aenderung einer Geschwindigkeitsdifferenz zwischen Förderorgan 9 und Antriebsvorrichtung 10 ausgebildet sind. Fig. 1 jedoch zeigt eine starre Antriebsverbindung zwischen Motor 32 einerseits und dem Förderorgan 9 sowie der Antriebsvorrichtung 10 andererseits, sodass ein konstantes Geschwindigkeitsverhältnis besteht.
Die Teil einer Eintaktvorrichtung 5 bildende Antriebsvorrichtung 10 ist zum gesteuerten Abbremsen resp. Anhalten der Buchblocks 2 und zum anschliessenden gesteuerten Beschleunigen der Buchblocks 2 zum richtigen Zeitpunkt bestimmt. Hierzu ist die Antriebsvorrichtung 10 vor dem Förderende des Förderorgans 9 positioniert. Zur Steuerung der Antriebsvorrichtung 10, die vorteilhaft auf beiden Seiten des als Förderkanal 8 ausgebildeten Förderweges 3 angeordnet ist und auf die vorbeiziehenden Buchblöcke 2 einwirkt, ist ein die in Förderrichtung F vordere Kante des Buchblocks 2 detektierender Sensor 12, beispielsweise aus Sender 13 und Empfänger 14 gebildet, in einem Förderbereich der Antriebsvorrichtung 10 angeordnet. Der an der Antriebsvorrichtung 10 in Förderrichtung F beim Anhalten eines Buchblocks 2 überstehende Abschnitt letzterens ist zweckmässig relativ kurz zu wählen, damit zur Beschleunigung von Buchblocks 2 geringerer Höhe eine ausreichende Friktionslänge verfügbar ist.
Sobald sich ein Buchblock 2 in der Bereitstellung zur Beschleunigung befindet, kann er durch ein Signal von der Folgemaschine abgerufen und dieser beschleunigt zugeführt werden, vorausgesetzt, ein nachfolgender Buchblock 2 befindet sich ebenfalls im Wirkbereich des Förderorgans 9. Hierbei bewirkt die Antriebsvorrichtung 10 zwischen dem beschleunigten Buchblock 2.2 und dem nachfolgenden Buchblock 2.1, der sich noch mit der Geschwindigkeit des Förderorgans 9 fortbewegt, eine Lücke resp. einen Abstand der u.a. verhindert, dass der nachfolgende Buchblock 2.1 von der Antriebsvorrichtung 10 mit Verzögerung resp. nicht anschliessend an Buchblock 2.2 erfasst wird. Das gemeinsame Verarbeiten zweier oder mehrerer hintereinander zugeführter Buchblocks 2, das durch die Aufnahmefähigkeit der anschliessenden Verarbeitungseinrichtung 34, beispielsweise eine sog. Ganzpresse bestimmt ist, wird erst durch die Anwesenheit eines nachfolgenden Buchblocks 2.1 im Wirkbereich des Förderorgans 9 ermöglicht. Zu diesem Zweck und im Sinn der Erfindung ist dem Sensor 12 ein weiterer Sensor 35 vorgeschaltet, der zumindest vor dem Wirkbereich der Antriebsvorrichtung 10 angeordnet, jedoch dem Förderorgan 9 zugeordnet ist. Der weitere Sensor 35 stellt den/die auf den ersten Buchblock 2.2 folgenden Buchblöcke 2.1 fest und gibt über die Steuerung 31 die gemeinsame Verarbeitung in der Verarbeitungseinrichtung 34 frei. Die Verarbeitungseinrichtung 34 zeigt eine Ganzpresse mit einer stationären, mit der Führungswand 6 des Förderorgans 9 fluchtenden Pressplatte 38 und einer etwa rechtwinklig zu dem zur Verarbeitungseinrichtung 34 gehörenden Transportband 33 resp. der Förderrichtung F der Buchblocks 2.1 und 2.2. im Sinne des Doppelpfeils 40 hin und her bewegbaren beweglichen Pressplatte 39. Doppelpfeil 40 stellt eine pneumatische, hydraulische oder mechanische Betätigungsvorrichtung für die bewegliche Pressplatte 39 dar, die mit der Steuerung 31 verbunden und im Takt des Förderorgans 9 und der Eintaktvorrichtung 5 betrieben wird.
Der Antrieb des Transportbandes 33 der Verarbeitungseinrichtung 33 erfolgt durch Motor 29, der durch die Steuerung 31 betätigt wird.
Die Antriebsvorrichtung 10 kann durch Antriebsrollen, oder wie in den Fig. 1 und 2 veranschaulicht, durch um mehrere Rollen 17, 18, 19 und 20, 21, 22 umlaufende Antriebsbänder 15, 16 ausgebildet sein. Die Rollen 17, 18, 19 resp. 20, 21, 22 sind jeweils in einer dreieckförmigen Anordnungsweise beidseits des Förderweges 3 positioniert, sodass die umlaufenden Antriebsbänder 15, 16 zwischen jeweils zwei Rollen ein Trum bilden.
Die dem Förderweg 3 jeweils nächstliegenden Rollenpaare 18, 19 resp. 21, 22 bilden ein Arbeitstrum 23, 24, die zusammenwirkend den Förderweg 3 in Förderrichtung F zunehmend verengen und so einen schonend wirkenden Einzugs- bzw. Förderspalt bilden. Von den dreieckförmigen Rollenanordnungen ist wenigstens die eine über eine Feder (nicht ersichtlich) abgestützt. Der Antrieb der Rollenanordnungen ist jeweils über Rolle 17, 20 vorgesehen, die mit dem Motor 32 antriebsverbunden sind oder wie oben beschrieben, einen eigenen mit der Steuerung 31 verbundenen Motor aufweisen.

## Patentansprüche

1. Einrichtung (1) zur gesteuerten Ueberführung von auf einem Förderweg (3) einer Verarbeitung zugeführten Buchblocks (2), bestehend aus einer Zuführvorrichtung (4) für die sich nacheinander auf dem Förderweg (3) folgenden Buchblocks (2), und einem in Förderrichtung (F) der Buchblocks (2) förderwirksam anschliessenden Förderorgan (9), auf dem die Buchblocks(2) seitlich geführt sind, sowie einer mit dem Förderorgan (9) zusammenwirkenden und die Buchblocks (2) im Näherungsbereich des Förderendes des Förderorgangs (9) erfassenden, als Eintaktvorrichtung (5) zur weiteren Verarbeitung ausgebildeten Antriebsvorrichtung (10), welcher über eine verbundene Steuerung (31) ein in Förderrichtung (F) auf die Vorderkante eines Buchblocks (2) reagierender Sensor (12) zugeordnet ist, **dadurch gekennzeichnet, dass** dem Sensor (12) entlang des Förderweges (3) ein weiterer, dem Förderorgan (9) zugeordneter und mit der Steuerung (31) verbundener Sensor (35) im Abstand (A) vorgeschaltet ist.

2. Einrichtung nach Anspruch 1, **dadurch gekennzeichnet, dass** der Abstand (A) zwischen den Sensoren (12, 35) veränderbar ist.

3. Einrichtung nach Anspruch 1 oder 2, **dadurch gekennzeichnet, dass** der weitere Sensor (35) bezüglich Abstand (A) von dem Sensor (12) verstell- resp. feststellbar angeordnet ist.

4. Einrichtung nach einem der Ansprüche 1 bis 3, **dadurch gekennzeichnet, dass** der Abstand (A) zwischen den Sensoren (12, 35) kleiner als die minimale Formathöhe wenigstens zweier sich auf dem Förderweg(3) folgender Buchblocks (2) ist.

5. Einrichtung nach einem der Ansprüche 1 bis 4, bei der das Förderorgan (9) als Förderband ausgebildet ist und eine geringere Fördergeschwindigkeit als die auf die Buchblocks (2) einwirkende Antriebsvorrichtung (10) aufweist.

6. Einrichtung nach einem der Ansprüche 1 bis 5, **dadurch gekennzeichnet, dass** das Förderorgan (9) wenigstens die Länge zweier sich folgender Buchblocks (2) aufweist.

7. Einrichtung nach einem der Ansprüche 1 bis 6, **dadurch gekennzeichnet, dass** das Förderorgan (9) wenigstens annähernd die Fördergeschwindigkeit der Zuführvorrichtung (4) aufweist.

8. Einrichtung nach einem der Ansprüche 1 bis 7, welche eine der Eintaktvorrichtung (5) in Förderrichtung (F) der Buchblocks (2) betrachtet nachgeschaltete und mit der Steuerung (31) verbundene Ganzpresse aufweist, die durch wenigstens eine quer zur Förderrichtung (F) der Buchblocks (2) antreibbare Pressplatte (39) und ein die Buchblocks (2) stützendes Transportband (33) ausgebildet ist, **dadurch gekennzeichnet, dass** die Eintaktvorrichtung (5) und das Transportband (33) der Ganzpresse zur Positionierung der zum gemeinsamen Abpressen gewählten Anzahl Buchblocks (2) zwischen den Pressplatten (38, 39) der Ganzpresse mit der Steuerung (31) verbunden sind.
